Europäisches Patentamt

European Patent Office

Office européen des brevets

(19)

(11) Publication number: **0 249 651 B1**

## (12) EUROPEAN PATENT SPECIFICATION

(45) Date of publication of patent specification: **05.02.92**

(51) Int. Cl.⁵: **C03C 4/08**, C03C 3/087, C03C 3/078

(21) Application number: **86110646.6**

(22) Date of filing: **01.08.86**

The file contains technical information submitted after the application was filed and not included in this specification

(54) **Glass of green coloration with high ultraviolet light absorption.**

(30) Priority: **18.06.86 IT 2082486**

(43) Date of publication of application:
**23.12.87 Bulletin 87/52**

(45) Publication of the grant of the patent:
**05.02.92 Bulletin 92/06**

(84) Designated Contracting States:
**AT BE CH DE FR GB IT LI LU NL SE**

(56) References cited:
**EP-A- 0 037 346**
**FR-A- 1 275 824**
**FR-A- 2 325 614**
**US-A- 4 312 953**

(73) Proprietor: **AVIR FINANZIARIA S.p.A.**
**Via Ratti, 5**
**I-14100 Asti(IT)**

(72) Inventor: **Ercole, Pietro**
**Via Gandolfino Roreto, 10**
**I-14100 Asti(IT)**

(74) Representative: **Giambrocono, Alfonso, Dr. Ing.**
**Ing. A. Giambrocono & C. S.r.l. Via Rosolino Pilo 19/B**
**I-20129 Milano(IT)**

## Description

This invention relates to green glass having the capacity to absorb ultraviolet light and light corresponding to the lowest wavelengths of the visible range. All glass possessing said property has always been considered very important because it enables containers to be made which are capable of protecting foodstuffs from the photochemical energy which is prevalently contained in low-wavelength light.

This result was empirically obtained in the distant past by preserving products most sensitive to light, such as wine, in very dark glass bottles which were then stored in very dark cellars.

In more recent times and still today, light-sensitive foodstuffs were and are preserved under amber glass which has excellent capacity for absorbing short-wavelength light (ultraviolet) because is contains sulphide chromophores.

In the last 15 years many attempts have been made to produce glass having not only this basic property but at the same time having spectrophotometric characteristics such as to appear green and be sufficiently transparent to enable the product present in the container to be seen through its wall.

The requirements for such a glass in practice are a very low transparency (less than 5%) in the spectrum range of between 350 and 450 nm, and at the same time a dominant wavelength of between 562 and 567 nm, a luminance not exceeding 30%, and a purity of not less than 70%.

Numerous patents have been filed in recent years, all claiming more or less the aforesaid spectophotometric characteristics.

French patent No. 1,275,824 claims the production of glass with ultraviolet light absorption characteristics by operating in the presence of hexavalent chromium.

However, the need to maintain the hexavalent chromium stable in the glass means that very oxidised vitrifiable mixtures must be used.

This requirement is generally satisfied by using sulphate quantities per ton of glass which are so high as to generate considerable problems both in terms of furnace operation and in terms of the quality of the glass bottles produced.

In this respect, it is known that when operating with very oxidising mixtures, large quantities of $SO_2$ and $SO_3$ must be removed from the fusion bath, and as these are very heavy gases they tend to form persistent foam on the molten glass. This substantially reduces in practice the radiant heat transfer to the furnace hearth, with the obvious consequence of overheating of the furnace superstructure and crown, and of the stacked material in the regeneration chambers.

Moreover, the high state of oxidation of the glass also results in the almost total absence of ferrous iron in the glass, with consequent high infrared light transmission by it.

This characteristic which, for the aforesaid reasons cannot be utilised in improving the radiant heat transmission in the furnace, causes obvious difficulty in controlling the apportioning of the glass when it is to be cooled in the moulding machines. This problem is related to the fact that the low infrared emissivity, consequent on the high infrared transmission, delays heat transfer between the glass and mould, to generate temperature and consequently viscosity differences in the parison, which then result in container defects and poor apportioning.

French patent No. 2,325,614, filed by Boussois-Souchon-Nevesel-Gervais-Danone on 23 September 1975 also attempts to produce a green glass with low ultraviolet light transmission by incorporating hexavalent chromium.

This however differs from the aforesaid French patent only in that the hexavalent chromium is formed during the processing of the glass by using the necessary oxidising conditions.

The teachings of this patent thus merely improve the French patent, with the not inconsiderable advantage of not having to handle sodium and/or potassium dichromate and/or chromate which, besides being very costly, cause skin disease.

Obviously the conditions proposed by the said French patent application result in the same problems already stated for the French patent, making the production uneconomical.

French patent application No. 8007422 corresponding to published European patent application No. 0037346 proposes more interesting working conditions in producing green-coloured glass with good ultraviolet light absorption capacity and thus able to protect from photochemical energy foodstuffs packaged in containers formed from it.

In contrast to the preceding patents, in accordance with the aforesaid patent application, the glass is processed in a reducing environment such as to generate, as for amber glass, the formation of sulphides which in the same manner as hexavalent chromium have the capacity to absorb ultraviolet light and thus give the green glass the required protective characteristics.

In practice, the only difference with respect to amber glass is that in order to obtain the required green

2

coloration, the French patent application uses chromite, employs higher $Fe_2O_3$ concentrations, and in order to mitigate the yellow effect of the sulphide chromophores suggests the use of cobalt oxide in a measured concentration.

French patent application No. 8007422 also claims the possibility of obtaining the required ultraviolet light absorption characteristics within a sulphide concentration range of between 0.01% and 0.04%, and maintains that this result can be obtained only by balancing the $Fe_2O_3$ and $Cr_2O_3$ concentrations in such a manner as to obtain a $Fe_2O_3/Cr_2O_3$ ratio of between 1.8 and 2.2. The lower values of said ratio are used for higher $Cr_2O_3$ concentrations, and vice versa.

The surprising discovery which constitutes the subject of the present invention is the possibility of obtaining glass having a filtering power for radiant light of wavelength between 350 and 450 nm which exceeds 95% when determined on test pieces of 5 mm thickness, and also characterised by a dominant wavelength, determined for the same thickness, which is between 562 and 567 nm, a purity exceeding 75% and preferably between 78 and 82%, and a luminance less than 25% and preferably between 20 and 22%, although operating with a sulphide ($S^{2-}$) concentration in the glass which is less than 0.005% and preferably between 0.003 and 0.005% and with a $Fe_2O_3/Cr_2O_3$ concentration ratio less than 2.0 and preferably between 1.4 and 1.6.

The present invention has shown that in order to obtain, in the presence of $Cr_2O_3$, development of the yellow chromophores with which the ultraviolet light filtering power is related, it is necessary to adjust the reducing power of the vitrifiable mixture in such a manner as to maintain the hereinafter stated quantity of sulphur in the oxidised state ($SO_3$) within the vitreous mass.

The ratio of sulphide concentration expressed as sulphur to $SO_3$ concentration expressed as sulphur must be less than 1 and preferably between 0.3 and 0.6. It has also been experimentally determined that the average temperature of the glass and its residence time in the fusion bath are parameters of considerable importance in obtaining the required spectrophotometric characteristics.

Thus in order for the required characteristics (ultraviolet light filtering power) to be constant with time, the reducing power of the vitrifiable mixtures (Redox number) and the glass temperature at the furnace hearth must be fixed at suitable levels and kept constant with time.

In this respect, it has been found that reactions leading to the formation of yellow sulphide chromophores develop only with difficulty at a glass temperature at the aforesaid point of less than $1200\,^{\circ}C$, but that these reactions can be activated while still at relatively low temperature by adequately increasing the reducing power of the mixture.

The reducing power of the vitrifiable mixture expressed in Redox units can vary between -18 and -7 according to the furnace hearth temperature. Obviously the more negative values of this parameter correspond to lower temperature values and vice versa.

It has also been found that precisely because of the low sulphide concentration (<0.005%) in the glass, it is not necessary to add cobalt oxide to obtain the required dominant wavelength values, thus allowing glass to be obtained of high purity and of relatively low luminance. It is nevertheless possible and useful in certain cases to incorporate cobalt oxide in the glass at a concentration of between 0.01 and 0.05%.

In the course of experiments carried out on an industrial scale it has been found possible to obtain glass with the required characteristics by operating over a wide range of vitrifiable mixture compositions provided the required Redox number is respected, this as stated being a function of the average temperature of the vitrifiable mass present in the melting furnace. The reducing components of the vitrifiable mixture can be blast furnace slag, coal or any other reducing compound, and their proportion can be varied over a very wide range.

The oxidising effect can be obtained with any type of alkaline or alkaline-earth sulphate, either anhydrous or containing water of crystallisation, either alone or in combination with others.

The sulphate concentration in the vitrifiable mixture can also be varied over a very wide range, which however must be compatible with that of the reducing components in order to exactly satisfy the required Redox number, as stated.

The use of coal as the reducing component for the vitrifiable mixture is not essential, but is of considerable aid in controlling the spectrophotometric characteristics and ultraviolet light filtering power of the glass produced, especially if outside scrap is used having an oxidation state which is unknown and non-constant with time.

Obtaining constant ultraviolet and infrared transmission characteristics for the glass produced is of considerable importance not only for ensuring permanent protection of the pharmaceutical products, wines, beer and general foodstuffs stored in the containers produced, but also for the workability of the glass in the moulding machines.

This is because with constant transmission characteristics for infrared light, and in particular light of 1000 nm wavelength, heat transfer from the parison to the mould when a glass container is produced in the moulding machine is constant and therefore more easily controllable.

Some embodiments are described hereinafter.

The green glass according to the present invention, and in particular glass having the compositions and characteristics shown in the following table, is obtained by preparing an intimate mixture of components as specified heretofore, and feeding it to a continuous furnace in which thermal equilibrium is maintained such as to ensure that the glass temperature at the furnace hearth in proximity to the furnace discharge throat or mouth is greater than or at least equal to about 1200° C.

The Redox number of the vitrifiable mixture is varied within the range -7 to -18 according to the glass temperature at the aforesaid point of the furnace. In particular, higher absolute Redox numbers must be used for lower temperatures, and lower Redox numbers must be used for higher temperatures.

The basic components of the vitrifiable mixture are siliceous sand, $CaCO_3$, dolomite, $Na_2CO_3$, blast furnace slag, organic or inorganic reducing compounds such as coal, alkaline or alkaline-earth sulphates, possibly containing water of crystallisation, either alone or in mixture, substances containing alumina, iron sesquioxide and chromite. The mixture also preferably contains cobalt oxide.

The quantities of the vitrifiable mixture components must be such that the green glass obtained has the required characteristics, ie such that the glass has a filtering power for ultraviolet light of wavelength between 350 and 450 nm which exceeds 95% when measured on test pieces of 5 mm thickness, and that the glass contains between 67 and 74% $SiO_2$, between 0 and 4.5% $Al_2O_3$, between 6 and 13% CaO, between 0 and 6% MgO, between 10 and 15% $Na_2O$, between 0 and 5% $K_2O$, and, as colouring compounds, $Fe_2O_3$, $Cr_2O_3$ and sulphides, these latter being present in a concentration of less than 0.005%.

The colouring components are present preferably in a concentration of between 0.15 and 0.40 for the $Fe_2O_3$, between 0.08 and 0.30 for the $Cr_2O_3$ and between 0 and 0.05 for the CoO.

Quantitative and qualitative examples of the composition of the vitrifiable mixture according to the present invention, the chemical analysis of the glass produced from it and its optical characteristics are apparent from the table given hereinafter, which requires no particular further comment.

## TABLE

RAW MATERIAL QUANTITIES

| TO OBTAIN 100 KG OF GLASS | | EXAMPLE 1 | EXAMPLE 2 | EXAMPLE 3 |
|---|---|---|---|---|
| Sand | kg | 72.60 | 72.30 | 73.20 |
| Blast furnace slag | " | 4.90 | 4.90 | 5.40 |
| Lime | " | 6.20 | 8.60 | 15.50 |
| Dolomite | " | 9.90 | 9.60 | – |
| Sodium carbonate | " | 24.00 | 22.50 | 22.00 |
| Sodium sulphate | " | 0.40 | 0.41 | 0.35 |
| Chromite | " | 0.40 | 0.42 | 0.51 |
| Iron oxide | " | 0.10 | 0.08 | 0.11 |
| Coal | " | 0.02 | 0.024 | 0.034 |
| Cobalt oxide | " | 0.01 | – | 0.015 |

CHEMICAL ANALYSIS OF

GLASS OBTAINED

| | | | | |
|---|---|---|---|---|
| $SiO_2$ | % | 71.28 | 71.09 | 71.19 |
| $Al_2O_3$ | " | 11.98 | 2.17 | 2.54 |
| $Fe_2O_3$ | " | 0.26 | 0.29 | 0.35 |
| CaO | " | 8.82 | 10.00 | 10.38 |
| MgO | " | 2.31 | 2.18 | 0.56 |
| $Na_2O$ | " | 14.20 | 13.19 | 13.50 |
| $K_2O$ | " | 0.94 | 0.86 | 1.21 |
| $S^{2-}$ | " | 0.003 | 0.0035 | 0.004 |
| $SO_3$ | " | 0.015 | 0.017 | 0.016 |
| $Cr_2O_3$ | " | 0.19 | 0.19 | 0.23 |
| CoO | " | 0.01 | – | 0.015 |

OPTICAL PROPERTIES OF

GLASS OBTAINED – 5 mm thickness

| | | | | |
|---|---|---|---|---|
| Dominant wavelength | nm | 565.5 | 565.8 | 566.9 |
| Purity | % | 78.0 | 82.0 | 82.1 |
| Luminance | % | 23.0 | 21.0 | 21.2 |
| Filtering power 350-450 nm | | 96 | 98 | 98 |
| T % 1000 nm | | 15.0 | 13.5 | 12.0 |
| Redox No. of mixture | | -9.1 | -9.9 | -14 |

## Claims

1. Green glass of soda lime type having a dominant wavelength between 562 and 567 nm and a filtering power for ultraviolet light with wavelength between 350 and 450 nm higher than 95%, both measured on test pieces of 5 mm thickness, containing as main components $SiO_2$ between 67 and 74%, $Al_2O_3$ between 0 and 4.5%, CaO between 6 and 13%, MgO between 0 and 6%, $Na_2O$ between 10 and 15%, $K_2O$ between 0 and 5% and also containing as colouring agents $Fe_2O_3$, $Cr_2O_3$ in a mutual ratio of 2 or lower, and sulphides in a concentration of 0.005% or lower.

2. Green glass as claimed in claim 1, characterised by also containing CoO as colouring component.

3. Green glass as claimed in claims 1 and 2, characterised in that said colouring components are present in the following concentration ranges:
$Fe_2O_3$ between 0.15 and 0.40
$Cr_2O_3$ between 0.08 and 0.30
CoO between 0 and 0.05.

4. Green glass as claimed in claims 1 to 3, characterised in that the sulphur contained therein is partly in the form of $SO_3$.

5. Green glass as claimed in claims 1 to 4, characterised in that the ratio of the sulphur present as sulphide to the sulphur present as $SO_3$ ($S^{2-}/SO_3$), both expressed as sulphur, is less than 1.

6. Green glass as claimed in claims 1 to 5, characterised in that the transmission of infrared light of wavelength 1000 nm, when measured on test pieces of 5 mm thickness, is less than 20%.

7. A process for producing green glass claimed in claims 1 to 6, characterised by preparing a vitrifiable mixture comprising siliceous sand, $CaCO_3$, dolomite. $Na_2CO_3$ blast furnace slag, organic or inorganic reducing compounds including coal, alkaline or alkaline-earth metal sulphates possibly containing water of crystallisation, either alone or in mixture with each other, alumina-containing substances, iron sesquioxide and chromite, the components of the aforesaid mixture being in such quantities that the glass obtained has the characteristics indicated in the preceding claims, and being intimately mixed together and then fed to a continuous furnace operated in such a manner as to maintain the glass temperature at the hearth in proximity to the furnace discharge mouth above about 1200°C.

8. A process as claimed in claim 7, characterised in that the Redox number of the vitrifiable mixture is between -7 and -18.

9. A process as claimed in claims 7 and 8, characterised in that the development of the sulphide chromophores is regulated both by controlling the glass temperature at the hearth in proximity to the furnace discharge mouth and by varying the Redox number of the vitrifiable mixture within the range of -7 to -18.

10. Containers obtained with the glass claimed in claims 1 to 6.

**Revendications**

1. Verre de couleur verte du type à base de soude et de chaux, ayant une longueur d'onde dominante se situant entre 562 et 567 nm et un pouvoir filtrant pour la lumière ultraviolette de longueur d'onde se situant entre 350 et 450 nm qui est supérieur à 95%, les deux étant mesurés sur des éprouvettes de 5 mm d'épaisseur, contenant, comme composants principaux :
- $SiO_2$ entre 67 et 74% ;
- $Al_2O_3$ entre 0 et 4,5% ;
- CaO entre 6 et 13% ;
- MgO entre 0 et 6% ;
- $Na_2O$ entre 10 et 15% ;
- $K_2O$ entre 0 et 5% ; et
contenant également, en tant qu'agents colorants, $Fe_2O_3$, $Cr_2O_3$ dans un rapport mutuel de 2 ou moins, et des sulfures dans une concentration de 0,005% ou moins.

2. Verre de couleur verte selon la revendication 1, caractérisé par le fait qu'il contient également CoO comme composant colorant.

3. Verre de couleur verte selon l'une des revendications 1 et 2, caractérisé par le fait que lesdits composants colorants sont présents dans les plages de concentration suivantes :
   - $Fe_2O_3$ entre 0,15 et 0,40 ;
   - $Cr_2O_3$ entre 0,08 et 0,30 ;
   - CoO entre 0 et 0,05.

4. Verre de couleur verte selon l'une des revendications 1 à 3, caractérisé par le fait que le sulfure contenu en son sein se trouve partiellement sous la forme $SO_3$.

5. Verre de couleur verte selon l'une des revendications 1 à 4, caractérisé par le fait que le rapport du soufre présent sous forme de sulfure au soufre présent sous la forme $SO_3$ ($S^{2-}/SO_3$), tous les deux exprimés en tant que soufre, est inférieur à 1.

6. Verre de couleur verte selon l'une des revendications 1 à 5, caractérisé par le fait que la transmission de la lumière infrarouge de longueur d'onde 1000 nm, lorsqu'elle est mesurée sur des éprouvettes de 5 mm d'épaisseur, est inférieure à 20%.

7. Procédé de fabrication du verre de couleur verte tel que défini à l'une des revendications 1 à 6, caractérisé par le fait que l'on prépare un mélange vitrifiable comprenant du sable siliceux, du $CaCO_3$, de la dolomite, du $Na_2CO_3$, du laitier de haut-fourneau, des composés réducteurs organiques ou minéraux comprenant le charbon, des sulfates de métaux alcalins ou alcalino-terreux contenant éventuellement de l'eau de cristallisation, soit seuls, soit en mélange entre eux, des substances contenant de l'alumine, du sesquioxyde de fer et du chromite, les composants du mélange mentionné ci-dessus étant introduits dans des quantités telles que le verre obtenu présente les caractéristiques indiquées dans les revendications précédentes, et étant intimement mélangés ensemble, puis introduits dans un four continu commandé de façon à maintenir la température du verre au niveau du foyer à proximité de l'orifice de décharge du four, au-dessus d'environ 1200° C.

8. Procédé selon la revendication 7, caractérisé par le fait que le nombre Redox du mélange vitrifiable se situe entre -7 et -18.

9. Procédé selon l'une des revendications 7 et 8, caractérisé par le fait que l'on régule le développement des chromophores de sulfure à la fois en contrôlant la température du verre au niveau du foyer à proximité de l'orifice de décharge du four et en faisant varier le nombre Redox du mélange vitrifiable à l'intérieur de la plage de -7 à -18.

10. Récipients obtenus avec le verre tel que défini à l'une des revendications 1 à 6.

## Patentansprüche

1. Grünglas vom Soda/Kalk-Typ mit beherrschender Wellen-Länge zwischen 562 und 567 nm und einer Filterkraft für Ultraviolettlicht mit Wellenlängen zwischen 350 und 450 nm von mehr als 95%, beide gemessen mit Probekörpern von 5 mm Dicke, welches als Hauptkomponenten $SiO_2$ zwischen 67 und 74%, $Al_2O_3$ zwischen 0 und 4,5%, CaO zwischen 6 und 13%, MgO zwischen 0 und 6%, $Na_2O$ zwischen 10 und 15%, $K_2O$ zwischen 0 und 5% enthält und das weiterhin als Färbemittel $Fe_2O_3$, $Cr_2O_3$ in einem gegenseitigen Verhältnis von 2 oder weniger und Sulfide in einer Konzentration von 0,005% oder weniger enthält.

2. Grünglas nach Anspruch 1, dadurch **gekennzeichnet,** daß es auch CoO als Färbekomponente enthält.

3. Grünglas nach Anspruch 1 oder 2, dadurch **gekennzeichnet,** daß die genannten Färbekomponenten in den folgenden Konzentrationsbereichen vorhanden sind:
   $Fe_2O_3$ zwischen 0,15 und 0,40,
   $Cr_2O_3$ zwischen 0,08 und 0,30,
   CoO zwischen 0 und 0,05.

4. Grünglas nach den Ansprüchen 1 bis 3, dadurch **gekennzeichnet,** daß der darin enthaltene Schwefel teilweise in der Form von $SO_3$ vorliegt.

**5.** Grünglas nach den Ansprüchen 1 bis 4, dadurch **gekennzeichnet,** daß das Verhältnis von als Sulfid vorliegendem Schwefel zu als $SO_3$ vorliegendem Schwefel ($S^{2-}/SO_3$), beide als Schwefel ausgedrückt, weniger als 1 ist.

**6.** Grünglas nach den Ansprüchen 1 bis 5, dadurch **gekennzeichnet,** daß die Durchlässigkeit von Infrarotlicht der Wellenlänge 1000 nm, gemessen mit Probekörpern von 5 mm Dicke, weniger als 20% ist.

**7.** Verfahren zur Herstellung von Grünglas nach den Ansprüchen 1 bis 6, dadurch **gekennzeichnet,** daß man ein verglasbares Gemisch herstellt, welches Quarzsand, $CaCO_3$, Dolomit, $Na_2CO_3$, Hochofenschlacke, organische oder anorganische reduzierende Verbindungen mit Einschluß von Kohle, Alkali- oder Erdalkalimetallsulfaten, die möglicherweise Kristallisationswasser enthalten, entweder allein oder im Gemisch miteinander, Aluminiumoxid enthaltende Substanzen, Eisensesquioxid und Chromit enthält, wobei die Komponenten des vorgenannten Gemisches in solchen Mengen vorhanden sind, daß das erhaltene Glas die in den vorstehenden Ansprüchen angegebenen Eigenschaften hat und innig miteinander vermischt ist und daß man es sodann in einem kontinuierlichen Ofen einspeist, der in einer solchen Weise betrieben wird, daß die Glastemperatur am Herd in der Nähe der Ofenauftragsöffnung oberhalb etwa 1200° C liegt.

**8.** Verfahren nach Anspruch 7, dadurch **gekennzeichnet,** daß die Redoxzahl des verglasbaren Gemisches zwischen -7 und -18 liegt.

**9.** Verfahren nach Anspruch 7 und 8, dadurch **gekennzeichnet,** daß man die Entwicklung der Sulfidchromophore sowohl durch Kontrolle der Glastemperatur am Herd in der Nähe der Ofenaustragungsöffnung und durch Variierung der Redoxzahl des verglasbaren Gemisches innerhalb des Bereiches von -7 bis -18 reguliert.

**10.** Behälter, dadurch **gekennzeichnet,** daß sie mit dem Glas der Ansprüche 1 bis 6 erhalten worden sind.